(19) **Europäisches Patentamt / European Patent Office / Office européen des brevets**

(11) **EP 3 901 789 A1**

(12) **EUROPEAN PATENT APPLICATION**
published in accordance with Art. 153(4) EPC

(43) Date of publication:
**27.10.2021 Bulletin 2021/43**

(51) Int Cl.:
**G06F 16/9535** (2019.01)

(21) Application number: **20887795.1**

(22) Date of filing: **09.06.2020**

(86) International application number:
**PCT/CN2020/095193**

(87) International publication number:
**WO 2021/093320 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2019 CN 201911106997**

(71) Applicant: **Beijing Baidu Netcom Science And Technology Co., Ltd.**
**Beijing 100085 (CN)**

(72) Inventors:
• **LIU, Haocheng**
  **Beijing 100085 (CN)**
• **LI, Yuan**
  **Beijing 100085 (CN)**

(74) Representative: **V.O.**
**P.O. Box 87930**
**2508 DH Den Haag (NL)**

(54) **METHOD AND APPARATUS FOR OUTPUTTING INFORMATION**

(57) Disclosed are a method and apparatus for outputting information. The method comprises: acquiring feature data of a user (201), wherein the feature data comprises a user identifier, feature variable values, and a label value corresponding to the user identifier; determining discrete feature variables and continuous feature variables in the feature variables (202); determining a set of discrete feature variable values corresponding to different label values and determining a set of continuous feature variable values corresponding to different label values (203); according to the set of discrete feature variable values corresponding to different label values and the set of continuous feature variable values corresponding to different label values, determining a set of feature variable values corresponding to different label values (204); and outputting the set of feature variable values corresponding to different label values (205). By means of the method, a label value corresponding to a user can be mined from big data, and efficient and automated information mining is realized.

Fig. 2

**Description**

This application claims the priority of Chinese Patent Application No. 201911106997.8, titled "METHOD AND APPARATUS FOR OUTPUTTING INFORMATION", filed by BEIJING BAIDU NETCOM SCIENCE AND TECHNOLOGY CO., LTD. on November 13, 2019, the content of which is incorporated herein by reference in its entirety.

TECHNICAL FIELD

Embodiments of the present disclosure relate to the field of computer technology, and specifically to a method and apparatus for outputting information.

BACKGROUND

At present, with the development of the national financial industry, the coverage of financial services has gradually expanded. For users who have lent money at the banks or have processed personal credit cards at the commercial banks, the central bank has stored their credit records, such as the loan amount, the number of times, whether to repaid on time, and the overdraft and repayment of the credit card consumption. The commercial banks can pay to transfer the credit records out, but for financial service objects that have not processed credit cards and have no loan records, their relevant credit information is lacking.

The big data brings the problems of high data latitude and large data magnitude to relevant financial businesses, and how to mine the credit features of relevant financial service objects from the big data is an important research topic at present.

SUMMARY

Embodiments of the present disclosure provide a method and apparatus for outputting information.

In a first aspect, an embodiment of the present disclosure provides a method for outputting information, and the method includes: acquiring feature data of users, the feature data including user identifiers, values of feature variables and label values corresponding to the user identifiers; determining a discrete feature variable and a continuous feature variable in the feature variables; determining sets of values of the discrete feature variable corresponding to different label values, and determining sets of values of the continuous feature variable corresponding to the different label values; determining sets of values of the feature variables corresponding to the different label values, based on the sets of values of the discrete feature variable corresponding to the different label values and the sets of values of the continuous feature variable corresponding to the different label values; and outputting the sets of values of the feature variables corresponding to the different label values.

In some embodiments, the determining a discrete feature variable and a continuous feature variable in the feature variables includes: performing, for each feature variable, following determination steps of: counting a first number of values of the feature variable and a second number of different values of the feature variable; determining a ratio of the second number to the first number; identifying, if the second number is greater than a preset number threshold and the ratio is greater than a preset ration threshold, the feature variable as the continuous feature variable; or identifying, if the second number is not greater than the preset number threshold and the ratio is not greater than the preset ratio threshold, the feature variable as the discrete feature variable.

In some embodiments, the determining sets of values of the discrete feature variable corresponding to different label values, includes: training to obtain a first binary classification model by using values of discrete feature variables and the label values corresponding to the user identifiers; determining a weight of each discrete feature variable based on the first binary classification model; extracting partial discrete feature variables based on the weight of each discrete feature variable; determining weights of evidence (WOE) for values of the extracted partial discrete features based on a preset calculation formula of the WOE and the label values corresponding to the user identifiers; and determining the sets of values of the discrete feature variable corresponding to the different label values based on the weight of evidence.

In some embodiments, the determining sets of values of the continuous feature variable corresponding to the different label values, includes: training to obtain a second binary classification model by using values of the continuous feature variable and the label values corresponding to the user identifiers; and determining the sets of values of the continuous feature variable corresponding to the different label values based on a decision path of the second binary classification model.

In some embodiments, the determining sets of values of the feature variables corresponding to the different label values based on the sets of values of the discrete feature variable corresponding to the different label values and the sets of values of the continuous feature variable corresponding to the different label values, includes: determining an intersection or a union for a set of values of the discrete feature variable corresponding to an individual label value of each of the label values and a set of values of the continuous feature variable corresponding to the individual label value of each of the label values to obtain a set of values of the feature variables corresponding to the individual label value of each of the label values.

In a second aspect, an embodiment of the present disclosure provides an apparatus for outputting information, including: a data acquisition unit configured to acquire feature data of users, the feature data including user identifiers, values of feature variables and label values corresponding to the user identifiers; a variable classification unit configured to determine a discrete feature variable and a continuous feature variable in the feature variables; a first set determination unit configured to determine sets of values of the discrete feature variable corresponding to different label values, and determine sets of values of the continuous feature variable corresponding to the different label values; a second set determination unit configured to determine sets of values of the feature variables corresponding to the different label values based on the sets of values of the discrete feature variable corresponding to the different label values and the sets of values of the continuous feature variable corresponding to the different label values; and a set output unit configured to output the sets of values of the feature variables corresponding to the different label values.

In some embodiments, the variable classification unit is further configured to: perform, for each feature variable, following determination steps of: counting a first number of values of the feature variable and a second number of different values of the feature variable; determining a ratio of the second number to the first number; identifying, if the second number is greater than a preset number threshold and the ratio is greater than a preset ration threshold, the feature variable as the continuous feature variable; or identifying, if the second number is not greater than the preset number threshold and the ratio is not greater than the preset ratio threshold, the feature variable as the discrete feature variable.

In some embodiments, the first set determination unit is further configured to: train to obtain a first binary classification model by using values of discrete feature variables and the label values corresponding to the user identifiers; determine a weight of each discrete feature variable based on the first binary classification model; extract partial discrete feature variables based on the weight of each discrete feature variable; determine weights of evidence (WOE) for values of extracted partial discrete features based on a preset calculation formula of the WOE and the label values corresponding to the user identifiers; and determine the sets of values of the discrete feature variable corresponding to the different label values based on the weight of evidence.

In some embodiments, the first set determination unit is further configured to: train to obtain a second binary classification model by using values of the continuous feature variable and the label values corresponding to the user identifiers; and determine the sets of values of the continuous feature variable corresponding to the different label values based on a decision path of the second binary classification model.

In some embodiments, the second set determination unit is further configured to: determine an intersection or a union for a set of values of the discrete feature variable corresponding to an individual label value of each of the label values and a set of value of the continuous feature variable corresponding to the individual label value of each of the label values to obtain a set of values of the feature variables corresponding to the individual label value of each of the label values.

In a third aspect, an embodiment of the present disclosure provides a server, and the server includes: one or more processor; and a storage device storing one or more programs, where the one or more programs, when executed by the one or more processors, cause the one or more processors to implement the method as described in any of the implementations of the first aspect.

In a fourth aspect, an embodiment of the present disclosure provides a computer readable storage storing computer programs, where the computer programs, when executed by a processor, implement the method as described in any of the implementations of the first aspect.

According to the method and apparatus for outputting information provided by the embodiments of the present disclosure, the feature data of the users is first acquired, and the feature data may include the user identifiers, the values of the feature variables and the label value corresponding to each feature variable; then, the feature variables are divided to determine the discrete feature variable and the continuous feature variable therein; the sets of the discrete feature variable corresponding to the different label values and the sets of the continuous feature variable corresponding to the different label values are determined; the sets of the feature variables corresponding to the different label values are determined based on the obtained corresponding relationship between the label values and the sets; and finally the sets of the feature variables corresponding to the different label values are output. According to the method of the embodiments, the label values corresponding to the users can be mined from the big data, thereby realizing the efficient and automated information mining.

BRIEF DESCRIPTION OF THE DRAWINGS

By reading the detailed description of non-limiting embodiments with reference to the following accompanying drawings, other features, objects and advantages of the present disclosure will become more apparent.

Fig. 1 is an example system architecture to which an embodiment of the present disclosure may be applied;

Fig. 2 is a flowchart of an embodiment of a method for outputting information according to the present disclosure;

Fig. 3 is a schematic diagram of an application scenario of the method for outputting information according to the present disclosure;

Fig. 4 is a flowchart of another embodiment of the method for outputting information according to the present disclosure;

Fig. 5 is a schematic structural diagram of an embodiment of an apparatus for outputting information according to the present disclosure; and

Fig. 6 is a schematic structural diagram of a computer system of a server adapted to implement an embodiment of the present disclosure.

## DETAILED DESCRIPTION OF EMBODIMENTS

The present disclosure will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are illustrated in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

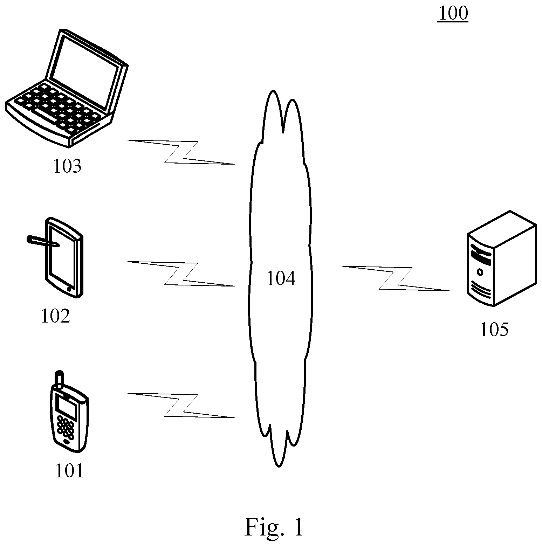

Fig. 1 shows an example system architecture 100 to which an embodiment of a method for outputting information or an apparatus for outputting information according to the present disclosure may be applied.

As shown in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages. Various communication client applications, such as web browser applications, shopping applications, search applications, instant messaging tools, email clients, social platform software, may be installed on the terminal devices 101, 102, 103.

The terminal devices 101, 102, 103 may be hardware or software. When the terminal devices 101, 102, 103 are hardware, the terminal devices 101, 102, 103 may be various electronic devices, including but not limited to, a smart phone, a tablet computer, an electronic book reader, a laptop portable computer and a desktop computer; and when the terminal devices 101, 102, 103 are software, the terminal devices 101, 102, 103 may be installed in the electronic devices, and may be implemented as multiple software pieces or software modules (such as for providing distributed services), or as a single software piece or software module, which is not specifically limited herein.

The server 105 may be a server providing various services, such as a background server that may process the feature data generated by the user through the terminal devices 101, 102, 103. The background server may perform processing, such as analysis on the acquired feature data, and feed back a processing result (such as the sets of feature variables corresponding to different label values) to the terminal devices 101, 102, 103.

It should be noted that the server 105 may be hardware or software. When the server 105 is hardware, the server 105 may be implemented as a distributed server cluster composed of multiple servers, or as a single server; and when the server 105 is software, the server 105 may be implemented as multiple software pieces or software modules (such as for providing distributed services), or as a single software piece or software module, which is not specifically limited herein.

It should be noted that the method for outputting information provided by the embodiments of the present disclosure is generally executed by the server 105. Correspondingly, the apparatus for outputting information is generally arranged in the server 105.

It should be appreciated that the number of the terminal devices, the network, the server in Fig. 1 is merely illustrative. Any number of terminal devices, networks, and servers may be provided according to actual requirements.

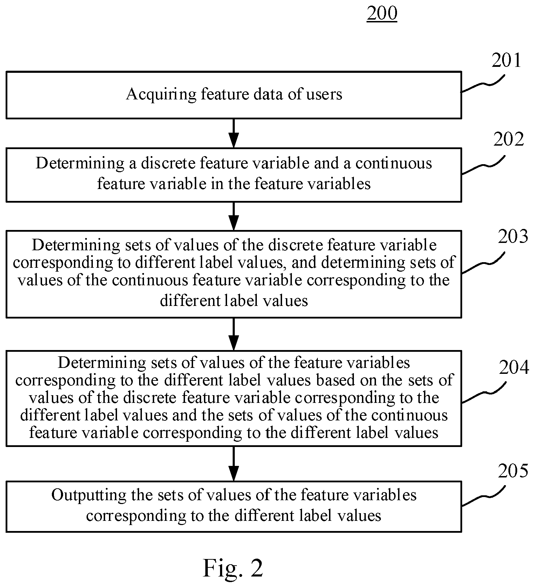

Further referring to Fig. 2, which shows a flow 200 of an embodiment of a method for outputting information according to the present disclosure. The method for outputting information of this embodiment includes steps 201 to 205.

Step 201 includes acquiring feature data of users.

In this embodiment, an execution body of the method for outputting information (such as the server 105 shown in Fig. 1) may acquire the feature data of the users through a wired connection or a wireless connection. The users may be users who have registered on a certain website. The feature data may include user identifiers, values of feature variables and label values corresponding to the user identifiers.

The user identifiers may be IDs registered by the users on the website. The feature variables may be user age, user educational background, user monthly income, user monthly consumption amount and the like. The feature variables may include a discrete feature variable and a continuous feature variable. The discrete feature variable refers to that its value can only be calculated in natural numbers or integer units. Conversely, a variable whose value can be arbitrarily taken in a certain interval is called a continuous feature variable. The label values corresponding to the users may include 0 or 1. Different label values may represent different user qualities. For example, a label value of 0 indicates that the user has a bad credit, and a label value of 1 indicates that the user has a good credit. Alternatively, a label value of 0 indicates that the user has a repayment capability, and a label value of 1 indicates that the user does not have a repayment capability.

The execution body may acquire the feature data of the users from a background server for supporting a website, or may acquire the feature data of the users from a database for storing feature data of users.

Step 202 includes determining a discrete feature variable and a continuous feature variable in the feature variables.

After acquiring the feature data, the execution body may analyze the feature variables to determine the discrete feature variable and the continuous feature variable therein. Specifically, the execution body may determine whether a feature variable is a discrete feature variable or a continuous feature variable according to the number of different values of the feature variable.

In some alternative implementations of this embodiment, the execution body may determine, for each feature variable, as the discrete feature variable or the continuous feature variable by the following determination steps (not shown in Fig. 2) of: counting a first number of values of a feature variable and a second number of different values of the feature variable; determining a ratio of the second number to the first number; identifying the feature variable as the continuous feature variable if the second number is greater than a preset number threshold and the ratio is greater than a preset ratio threshold; or identifying the feature variable as the discrete feature variable, if the second number is not greater than the preset number threshold or the ratio is not greater than the preset ratio threshold.

In this implementation, the execution body may count the first number of the values of each feature variable and the second number of the different values of each feature variable. For example, a feature variable is age. The values of the age may include 20, 25, 22, 29, 25, 22, 26. Then the first number of the values of the age is 7, and the second number of the different values of the age is 5 (repeated 25 and 22 are removed). The execution body may then calculate the ratio of the second number to the first number. For the previous example, the above ratio is 5/7. If the second number is greater than a preset number threshold and the ratio is greater than a preset ratio threshold, the feature variable is identified as a continuous feature variable. Otherwise, the feature variable is identified as a discrete feature variable.

Step 203 includes determining sets of values of the discrete feature variable corresponding to different label values, and determining sets of values of the continuous feature variable corresponding to the different label values.

After determining the discrete feature variable and the continuous feature variable, the execution body may determine the sets of values of the discrete feature variable corresponding to the different label values and the sets of values of the continuous feature variable corresponding to the different label values respectively. Specifically, the execution body may perform statistics on the feature data of a large number of users, and determine the values of the common discrete feature variables and the values of the common continuous feature variables among multiple users having a same label value. Then, based on the results of the statistics, the sets of values of the discrete feature variables corresponding to the different label values and the sets of values of the continuous feature variables corresponding to the different label values are obtained. For example, the execution body performs statistics on the feature data of 1000 users, and finds that the values of the common discrete feature variables of the 780 users having the label value of 1 are as follows: educational backgrounds are master degree and above, ages are between 25 and 35 years old, the monthly incomes are more than 15,000 yuan, and the monthly consumption amount are less than 8,000 yuan. Then, the execution body may determine that the sets of values of the discrete feature variables corresponding to the label value of 1 include elements: the educational backgrounds being master degree and above, and the ages being between 25 and 35 years old; and determine that the sets of values of the continuous feature variables corresponding to the label value of 1 include elements: the monthly incomes being more than 15,000 yuan and the monthly consumption amount being less than 8,000 yuan.

Step 204 includes determining sets of values of the feature variables corresponding to the different label values based on the sets of values of the discrete feature variable corresponding to the different label values and the sets of values of the continuous feature variable corresponding to the different label values.

After determining the sets of values of the discrete feature variable corresponding to the different label values and the sets of values of the continuous feature variable corresponding to the different label values, the execution body may determine the sets of values of the feature variables corresponding to the different label values based on these sets of values.

In some alternative implementations of this embodiment, the execution body may determine the sets of values of the feature variables corresponding to the different label values by the following steps (not shown in Fig. 2) of: determining an intersection or a union for a set of values of the discrete feature variable corresponding to an individual label value of each of the label values and a set of values of the continuous feature variable corresponding to the individual label value of each of the label values to obtain a set of values of the feature variables corresponding to the individual label value of each of the label values.

In this implementation, the execution may determine the intersection or the union for the set of values of the discrete feature variable corresponding to an individual label value and the set of values of the continuous feature variable corresponding to the individual label value to obtain the set of values of the feature variables corresponding to the individual label value. It should be appreciated that whether to perform the intersection operation or the union operation on the two sets of values may be chosen according to the specific situations of businesses.

Step 205 includes outputting the sets of values of the feature variables corresponding to the different label values.

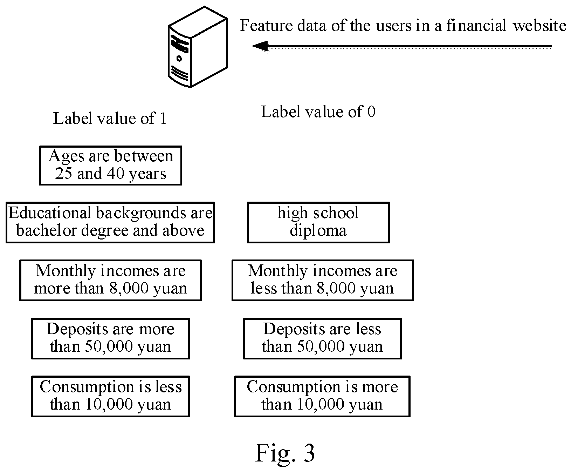

Further referring to Fig. 3, Fig. 3 is a schematic diagram of an application scenario of the method for outputting information according to this embodiment. In the application scenario of Fig. 3, the server acquires the feature data of the users in a financial website. After the feature data is processed according to the steps 201 to 204, it is determined that the features for the label value of 1 (users with high-quality credits) are: ages being between 25 and 40 years old, educational backgrounds being bachelor degree and above, monthly incomes being more than 8,000 yuan, deposits being more than 50,000 yuan, and consumption being less than 10,000 yuan, and the features of the label value of 0 (users with low-quality credits) are: educational backgrounds being high school educations, monthly incomes being less than 8,000 yuan, deposits being less than 50,000 yuan, and consumption being more than 10,000 yuan.

According to the method for outputting information provided by the embodiments of the present disclosure, the feature data of the users is first acquired, and the feature data may include the user identifiers, the values of the feature variables and the label value corresponding to each feature variable; then, the feature variables are divided to determine the discrete feature variable and the continuous feature variable therein; the sets of the discrete feature variables corresponding to the different label values and the sets of the continuous feature variables corresponding to the different label values are determined; the sets of the feature variables corresponding to the different label values are determined based on the obtained corresponding relationship between the label values and the sets; and finally the sets of the feature variables corresponding to the different label values are output. According to the method of this embodiment, the label values corresponding to the users can be mined from the big data, thereby realizing the efficient and automated information mining.

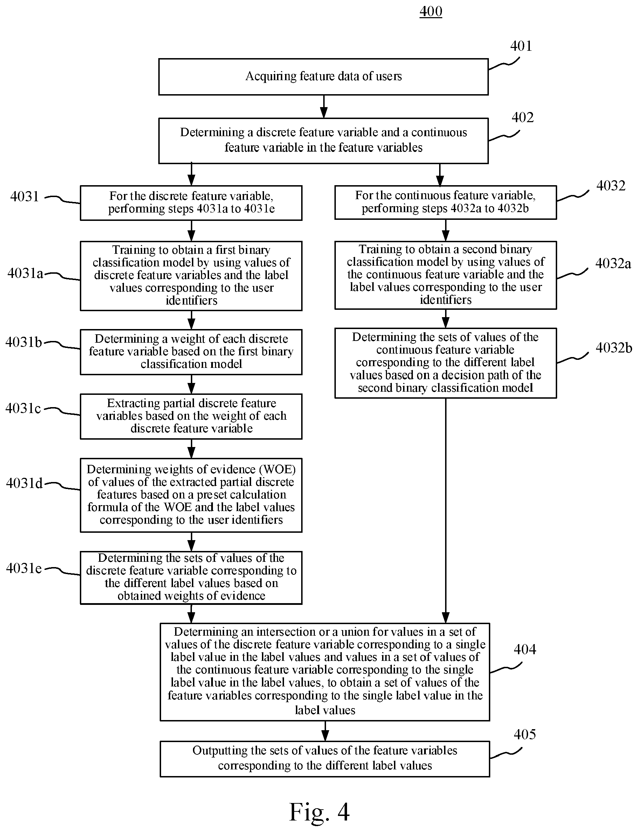

Further referring to Fig. 4, Fig. 4 shows a flow 400 of another embodiment of the method for outputting information according to the present disclosure. As shown in Fig. 4, the method for outputting the information of this embodiment may include steps 401 to 404.

Step 401 includes acquiring feature data of users.

Step 402 includes determining a discrete feature variable and a continuous feature variable in the feature variables.

Step 4031 includes, for the discrete feature variable, performing steps 4031a to 4031e.

Step 4031a includes training to obtain a first binary classification model by using values of discrete feature variables and the label values corresponding to the user identifiers.

In this embodiment, the execution body may use the values of the discrete feature variables and the label values corresponding to the user identifiers as training samples to train to obtain the first binary classification model. Specifically, the execution body may use the values of the discrete feature variables and the label values corresponding to the user identifier to obtain the first binary classification model by using the XGBoost multi-round training parameter optimization method. The XGBoost (eXtreme Gradient Boosting) is an integrated learning algorithm proposed by Tian Chen in 2015. The conventional XGBoost algorithm is derived from the Boosting integrated learning algorithm, and integrates the advantages of the Bagging integrated learning method in the evolution process, and improves the ability of the algorithm to solve general problems by defining the loss functions through the Gradient Boosting framework. Therefore, the XGBoost algorithm is very frequently used in academic competitions and industry fields, and can be effectively applied to specific scenarios, such as classification, regression, and sorting.

Step 4031b includes determining a weight of each discrete feature variable based on the first binary classification model.

After the first binary classification model is obtained by training, the weight of each discrete feature variable may be further obtained. The weight is obtained by adding up the scores of each discrete feature variable predicted by each tree.

Step 4031c includes extracting partial discrete feature variables based on the weights of discrete feature variables.

The execution body may sort the discrete feature variables according to the weights of the discrete feature variables, and extract the top 10% of the sorted discrete feature variables as the feature variables for further discussion.

Step 4031d includes determining weights of evidence (WOE) for values of the extracted partial discrete features based on a preset calculation formula of the WOE and the label values corresponding to the user identifiers.

The execution body may calculate the WOE for the values of each extracted discrete feature based on the preset calculation formula of the WOE and the label values corresponding to the user identifiers. The preset calculation formula of WOE may be as follows:

$$\text{WOE} = \ln((\text{the proportion of users with the label of 1})/(\text{the proportion of }$$

$$\text{users with the label of 0}))*100\%,$$

where (the proportion of users with the label of 1)=(the number of the users with the label of 1)/(the total number of users), and (the proportion of users with the label of 0)=(the number of the users with the label of 0)/(the total number of users).

Step 4031e includes determining the sets of values of the discrete feature variable corresponding to the different label values based on obtained weight of evidence.

After determining the WOE of each extracted discrete feature variable value, the execution body may determine the sets of values of the discrete feature variable corresponding to the different label values. For example, the execution body may add the values of the discrete feature variable, of which the WOE is greater than zero, to the set of values of the discrete feature variable corresponding to the label value of 1, and add the values of the discrete feature variable, of which the WOE is not greater than zero, to the set of values of the discrete feature variable corresponding to the label value of 0.

Step 4032 includes for the continuous feature variable, performing steps 4032a to 4032b.

Step 4032a includes training to obtain a second binary classification model by using values of the continuous feature variable and the label values corresponding to the user identifiers.

The execution body may use the values of each continuous feature variable and the label values corresponding to the user identifiers to perform multi-round training by using a decision tree to obtain a decision tree split point structure, i.e., the second binary classification model.

Step 4032b includes determining the sets of values of the continuous feature variable corresponding to the different label values based on a decision path of the second binary classification model.

After the second binary classification model is obtained, the set of values of the continuous feature variable corresponding to the label value of 1 may be obtained according to the decision path for the label value of 1 obtained in the second binary classification model, and the value set of the continuous feature variable corresponding to the label value of 0 may further be obtained according to the decision path for the label value of 0 obtained in the second binary classification model.

Step 404 includes determining an intersection or a union for a set of values of the discrete feature variable corresponding to an individual label value of each of the label values and a set of values of the continuous feature variable corresponding to the individual label value of each of the label values to obtain a set of values of the feature variables corresponding to the individual label value of each of the label values.

Step 405 includes outputting the sets of values of the feature variables corresponding to the different label values.

After obtaining the sets of values of the feature variables corresponding to the different label values, the execution body may formulate corresponding rules. For example, based on the set of values of the feature variables corresponding to the label value of 1, the rules are determined as "users who satisfy that ages are between 25 and 40 years old; educational backgrounds are bachelor degree and above; monthly incomes are more than 8,000 yuan; deposits are more than 50,000 yuan; and consumption is less than 10,000 yuan, are users with high-quality credits".

According to the method for outputting information provided in the above embodiments of the present disclosure, the binary classification model may be used to realize the mining of the feature data of the users, so that the confidence of the mined information is higher.

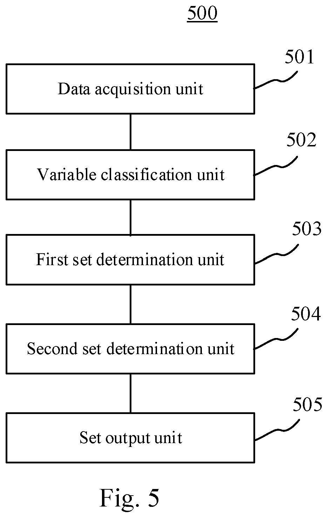

Further referring to Fig. 5, as an implementation of the method shown in above figures, the present disclosure provides an embodiment of an apparatus for outputting information. The embodiment of the apparatus corresponds to the embodiment of the method shown in Fig. 2, and the apparatus is particularly applicable to various electronic devices.

As shown in Fig. 5, the apparatus 500 for outputting information of this embodiment includes: a data acquisition unit 501, a variable classification unit 502, a first set determination unit 503, a second set determination unit 504 and a set output unit 505.

The data acquisition unit 501 is configured to acquire feature data of users, the feature data including user identifiers, values of feature variables and label values corresponding to the user identifiers.

The variable classification unit 502 is configured to determine a discrete feature variable and a continuous feature variable in the feature variables.

The first set determination unit 503 is configured to determine sets of values of the discrete feature variable corresponding to different label values, and determine sets of values of the continuous feature variable corresponding to the different label values.

The second set determination unit 504 is configured to determine sets of values of the feature variables corresponding to the different label values based on the sets of values of the discrete feature variable corresponding to the different label values and the sets of values of the continuous feature variable corresponding to the different label values.

The set output unit 505 is configured to output the sets of values of the feature variables corresponding to the different label values.

In some alternative implementations of this embodiment, the variable classification unit 502 may be further configured to: perform, for each feature variable, following determination steps of: counting a first number of values of a feature variable and a second number of different values of the feature variable; determining a ratio of the second number to the first number; identifying, if the second number is greater than a preset number threshold and the ratio is greater than a preset ration threshold, the feature variable as the continuous feature variable; or identifying, if the second number is not greater than the preset number threshold and the ratio is not greater than the preset ratio threshold, the feature variable as the discrete feature variable.

In some alternative implementations of this embodiment, the first set determination unit 503 may be further configured to: train to obtain a first binary classification model by using values of discrete feature variables and the label values corresponding to the user identifiers; determine a weight of each discrete feature variable based on the first binary classification model; extract partial discrete feature variables based on the weight of each discrete feature variable; determine a weigh of evidence (WOE) for values of extracted partial discrete features based on a preset calculation formula of the WOE and the label values corresponding to the user identifiers; and determine the sets of values of the discrete feature variable corresponding to the different label values based on the obtained weight of evidence.

In some alternative implementations of this embodiment, the first set determination unit 503 may be further configured to: train to obtain a second binary classification model by using values of the continuous feature variable and the label values corresponding to the user identifiers; and determine the sets of values of the continuous feature variable corresponding to the different label values based on a decision path of the second binary classification model.

In some alternative implementations of this embodiment, the second set determination unit 504 may be further configured to: determine an intersection or a union of a set of values of the discrete feature variable corresponding to an individual label value of each of the label values and a set of values of the continuous feature variable corresponding to the individual label value of each of the label values to obtain a value set of the feature variables corresponding to the individual label value of each of the label values.

It should be appreciated that the units 501 to 505 described in the apparatus 500 for outputting information respectively correspond to the steps in the method described with reference to Fig. 2. Therefore, the operations and features described above for the method for outputting information are also applicable to the apparatus 500 and the units included in the apparatus 500, and thus are not described in detail herein.

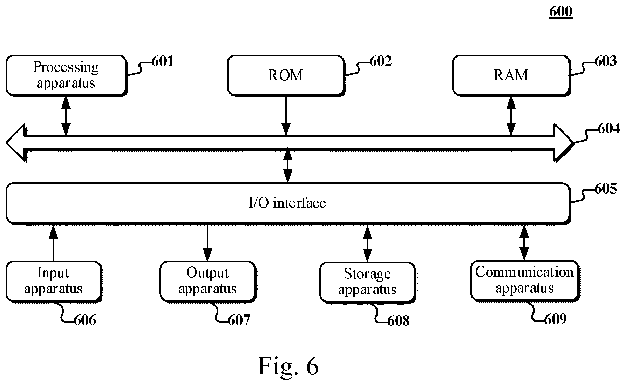

Referring to Fig. 6, which shows a schematic structural diagram of an electronic device 600 (such as the server in Fig. 1) adapted to implement the embodiments of the present disclosure. The server shown in Fig. 6 is merely an example and should not be construed as limiting the functionality and use scope of the embodiments of the present disclosure.

As shown in Fig. 6, the electronic device 600 may include a processing apparatus 601 (such as a central processing unit and a graphic processor), which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the electronic device 600. The processing apparatus 601, the ROM 602 and the RAM 603 are connected to each other through a bus 604. An input/output (I/O) interface 605 is also connected to the bus 604.

Generally, the following apparatuses are connected to the I/O interface 605: an input apparatus 606 including a touch screen, a touchpad, a keyboard, a mouse, a camera, a microphone, an accelerometer, a gyroscope and the like; an output apparatus 607 including a liquid crystal display (LCD), a speaker, a vibrator and the like; a storage apparatus 608 including a magnetic tap, a hard disk and the like; and a communication apparatus 609. The communication apparatus 609 may allow the electronic device 600 to perform wireless or wired communication with other devices to exchange data. Although Fig. 6 shows the electronic device 600 having various apparatuses, it should be appreciated that it is not required to implement or provide all the shown apparatuses, and it may alternatively be implemented or provided with more or fewer apparatuses. Each block shown in Fig. 6 may represent one apparatus or multiple apparatuses according to requirements.

In particular, according to the embodiments of the present disclosure, the process described above with reference to the flowchart may be implemented as a computer software program. For example, the embodiments of the present disclosure include a computer program product, which includes a computer program carried on a computer readable medium. The computer program includes program codes for executing the method shown in the flowchart. In such an embodiment, the computer program may be downloaded and installed from a network via the communication apparatus 609, or may be installed from the storage apparatus 608, or may be installed from the ROM 602. The computer program, when executed by the processing apparatus 601, implements the above functionalities as defined by the method of the embodiments of the present disclosure. It should be noted that the computer readable medium described by the embodiments of the present disclosure may be computer readable signal medium or computer readable storage medium or any combination of the above two. The computer readable storage medium may be, but is not limited to: an electric, magnetic, optical, electromagnetic, infrared, or semiconductor system, an apparatus, an element, or any combination of the above. A more specific example of the computer readable storage medium may include but is not limited to: an electrical connection with one or more wires, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the embodiments of the present disclosure, the computer readable storage medium may be any physical medium containing or storing programs which can be used by or in combination with an instruction execution system, an apparatus or an element. In the embodiments of the present disclosure, the computer readable signal medium may include a data signal in the base band or propagating as a part of a carrier, in which computer readable program codes are carried. The propagating signal may be various forms, including but not limited to: an electromagnetic signal, an optical signal or any suitable combination of the above. The computer readable signal medium may be any computer readable medium except for the computer readable storage medium. The computer readable signal medium is capable of transmitting, propagating or transferring programs for use by or in combination with an instruction execution system, an apparatus or an element. The program codes contained on the computer readable medium may be transmitted with any suitable medium including but not limited to: a wire, an optical cable, RF (Radio Frequency), or any suitable combination of the above.

The above computer readable medium may be included in the electronic device; or may alternatively be present alone and not assembled into the electronic device. The computer readable medium carries one or more programs that, when executed by the electronic device, cause the electronic device to: acquire feature data of users, the feature data including user identifiers, values of feature variables and a label value corresponding to each user identifier; determine a discrete feature variable and a continuous feature variable in the feature variables; determine sets of values of the discrete feature variable corresponding to different label values, and determine sets of values of the continuous feature variable corresponding to the different label values; determine sets of values of the feature variables corresponding to the different label values based on the sets of values of the discrete feature variable corresponding to the different label values and the sets of values of the continuous feature variable corresponding to the different label values; and output the sets of values of the feature variables corresponding to the different label values.

A computer program code for executing operations of the embodiments of the present disclosure may be written in one or more programming languages or a combination thereof. The programming languages include object-oriented programming languages, such as Java, Smalltalk or C++, and also include conventional procedural programming languages, such as "C" language or similar programming languages. The program code may be completely executed on a user computer, partially executed on a user computer, executed as a separate software package, partially executed on a user computer and partially executed on a remote computer, or completely executed on a remote computer or server. In a case involving a remote computer, the remote computer may be connected to a user computer through any kind of network, including a local area network (LAN) or a wide area network (WAN), or may be connected to an external computer (for example, connected through Internet using an Internet service provider).

The flowcharts and block diagrams in the accompanying drawings show architectures, functions and operations that may be implemented according to the systems, methods and computer program products of the various embodiments of the present disclosure. In this regard, each of the blocks in the flowcharts or block diagrams may represent a module, a program segment, or a code portion, the module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flowcharts as well as a combination of blocks in the block diagrams and/or flowcharts may be implemented using a dedicated hardware-based system executing specified functions or operations, or by a combination of a dedicated hardware and computer instructions.

The units involved in the embodiments of the present disclosure may be implemented by means of software or hardware. The described units may also be provided in a processor, for example, described as: a processor, including a data acquisition unit, a variable classification unit, a first set determination unit, a second set determination unit and a set output unit, where the names of these units do not constitute a limitation to such units themselves in some cases. For example, the data acquisition unit may alternatively be described as "a unit of acquiring feature data of users".

The above description only provides an explanation of the preferred embodiments of the present disclosure and the technical principles used. It should be appreciated by those skilled in the art that the inventive scope involved in the embodiments of the present disclosure is not limited to the technical solutions formed by the particular combinations of the above technical features. The inventive scope should also cover other technical solutions formed by any combinations of the above technical features or equivalent features thereof without departing from the concept of the present disclosure, such as technical solutions formed through the above features and technical features having similar functions provided (or not provided) in the embodiments of the present disclosure being replaced with each other.

**Claims**

1.  A method for outputting information, the method comprising:

    acquiring feature data of users, the feature data comprising user identifiers, values of feature variables and label values corresponding to the user identifiers;
    determining a discrete feature variable and a continuous feature variable in the feature variables;
    determining sets of values of the discrete feature variable corresponding to different label values, and determining sets of values of the continuous feature variable corresponding to the different label values;
    determining sets of values of the feature variables corresponding to the different label values based on the sets of values of the discrete feature variable corresponding to the different label values and the sets of values of the continuous feature variable corresponding to the different label values; and
    outputting the sets of values of the feature variables corresponding to the different label values.

2.  The method according to claim 1, wherein the determining a discrete feature variable and a continuous feature variable in the feature variables comprises:
    performing, for each feature variable, following determination steps of:

    counting a first number of values of the each feature variable and a second number of different values of the each feature variable;
    determining a ratio of the second number to the first number;
    identifying, if the second number is greater than a preset number threshold and the ratio is greater than a preset ration threshold, the feature variable as the continuous feature variable; or
    identifying, if the second number is not greater than the preset number threshold and the ratio is not greater than the preset ratio threshold, the feature variable as the discrete feature variable.

3.  The method according to claim 1, wherein the determining sets of values of the discrete feature variable corresponding to different label values, comprises:

    training to obtain a first binary classification model by using values of discrete feature variables and the label values corresponding to the user identifiers;
    determining a weight of each discrete feature variable based on the first binary classification model;
    extracting partial discrete feature variables based on the weight of each discrete feature variable;
    determining weights of evidence (WOE) for values of the extracted partial discrete features based on a preset calculation formula of the WOE and the label values corresponding to the user identifiers; and
    determining the sets of values of the discrete feature variable corresponding to the different label values based on the weight of evidence.

4.  The method according to claim 1, wherein the determining sets of values of the continuous feature variable corresponding to the different label values, comprises:

    training to obtain a second binary classification model by using values of the continuous feature variable and the label values corresponding to the user identifiers; and
    determining the sets of values of the continuous feature variable corresponding to the different label values based on a decision path of the second binary classification model.

5.  The method according to claim 1, wherein the determining sets of values of the feature variables corresponding to the different label values based on the sets of values of the discrete feature variable corresponding to the different label values and the sets of values of the continuous feature variable corresponding to the different label values, comprises:

determining an intersection or a union for a set of values of the discrete feature variable corresponding to an individual label value of each of the label values and a set of values of the continuous feature variable corresponding to the individual label value of each of the label values to obtain a set of values of the feature variables corresponding to the individual label value of each of the label values.

6. An apparatus for outputting information, the apparatus comprising:

a data acquisition unit, configured to acquire feature data of users, the feature data comprising user identifiers, values of feature variables and label values corresponding to the user identifiers;

a variable classification unit, configured to determine a discrete feature variable and a continuous feature variable in the feature variables;

a first set determination unit, configured to determine sets of values of the discrete feature variable corresponding to different label values, and determine sets of values of the continuous feature variable corresponding to the different label values;

a second set determination unit, configured to determine sets of values of the feature variables corresponding to the different label values based on the sets of values of the discrete feature variable corresponding to the different label values and the sets of values of the continuous feature variable corresponding to the different label values; and

a set output unit, configured to output the sets of values of the feature variables corresponding to the different label values.

7. The apparatus according to claim 6, wherein the variable classification unit is further configured to:
perform, for each feature variable, following determination steps of:

counting a first number of values of the each feature variable and a second number of different values of the each feature variable;

determining a ratio of the second number to the first number;

identifying, if the second number is greater than a preset number threshold and the ratio is greater than a preset ration threshold, the feature variable as the continuous feature variable; or

identifying, if the second number is not greater than the preset number threshold and the ratio is not greater than the preset ratio threshold, the feature variable as the discrete feature variable.

8. The apparatus according to claim 6, wherein the first set determination unit is further configured to:

train to obtain a first binary classification model by using values of discrete feature variables and the label values corresponding to the user identifiers;

determine a weight of each discrete feature variable based on the first binary classification model;

extract partial discrete feature variables based on the weight of each discrete feature variable;

determine weighs of evidence (WOE) for values of extracted partial discrete features based on a preset calculation formula of the WOE and the label values corresponding to the user identifiers; and

determine the sets of values of the discrete feature variable corresponding to the different label values based on the weight of evidence.

9. The apparatus according to claim 6, wherein the first set determination unit is further configured to:

train to obtain a second binary classification model by using values of the continuous feature variable and the label values corresponding to the user identifiers; and

determine the sets of values of the continuous feature variable corresponding to the different label values based on a decision path of the second binary classification model.

10. The apparatus according to claim 6, wherein the second set determination unit is further configured to:
determine an intersection or a union for a set of values of the discrete feature variable corresponding to an individual label value of each of the label values and a set of value of the continuous feature variable corresponding to the individual label value of each of the label values to obtain a set of values of the feature variables corresponding to the individual label value of each of the label values.

11. A server, comprising:

one or more processors; and
a storage device storing one or more programs, wherein the one or more programs, when executed by the one or more processors, cause the one or more processors to implement the method according to any one of claims 1 to 5.

12. A computer readable medium storing computer programs, wherein the computer programs, when executed by a processor, implement the method according to any one of claims 1 to 5.

Fig. 1

<u>200</u>

201

┌─────────────────────────────────────────────────┐
│         Acquiring feature data of users          │
└─────────────────────────────────────────────────┘

202

┌─────────────────────────────────────────────────┐
│  Determining a discrete feature variable and a continuous  │
│        feature variable in the feature variables  │
└─────────────────────────────────────────────────┘

203

┌─────────────────────────────────────────────────┐
│  Determining sets of values of the discrete feature variable │
│  corresponding to different label values, and determining sets of │
│  values of the continuous feature variable corresponding to the │
│              different label values               │
└─────────────────────────────────────────────────┘

204

┌─────────────────────────────────────────────────┐
│  Determining sets of values of the feature variables │
│  corresponding to the different label values based on the sets of │
│  values of the discrete feature variable corresponding to the │
│  different label values and the sets of values of the continuous │
│  feature variable corresponding to the different label values │
└─────────────────────────────────────────────────┘

205

┌─────────────────────────────────────────────────┐
│  Outputting the sets of values of the feature variables │
│       corresponding to the different label values │
└─────────────────────────────────────────────────┘

Fig. 2

Feature data of the users in a financial website

Label value of 1

Label value of 0

| Ages are between 25 and 40 years |
|---|

| Educational backgrounds are bachelor degree and above |
|---|

high school diploma

| Monthly incomes are more than 8,000 yuan |
|---|

Monthly incomes are less than 8,000 yuan

| Deposits are more than 50,000 yuan |
|---|

Deposits are less than 50,000 yuan

| Consumption is less than 10,000 yuan |
|---|

Consumption is more than 10,000 yuan

Fig. 3

400

401
Acquiring feature data of users

402
Determining a discrete feature variable and a continuous feature variable in the feature variables

4031
For the discrete feature variable, performing steps 4031a to 4031e

4032
For the continuous feature variable, performing steps 4032a to 4032b

4031a
Training to obtain a first binary classification model by using values of discrete feature variables and the label values corresponding to the user identifiers

4032a
Training to obtain a second binary classification model by using values of the continuous feature variable and the label values corresponding to the user identifiers

4031b
Determining a weight of each discrete feature variable based on the first binary classification model

4032b
Determining the sets of values of the continuous feature variable corresponding to the different label values based on a decision path of the second binary classification model

4031c
Extracting partial discrete feature variables based on the weight of each discrete feature variable

4031d
Determining weights of evidence (WOE) of values of the extracted partial discrete features based on a preset calculation formula of the WOE and the label values corresponding to the user identifiers

4031e
Determining the sets of values of the discrete feature variable corresponding to the different label values based on obtained weights of evidence

404
Determining an intersection or a union for values in a set of values of the discrete feature variable corresponding to a single label value in the label values and values in a set of values of the continuous feature variable corresponding to the single label value in the label values, to obtain a set of values of the feature variables corresponding to the single label value in the label values

405
Outputting the sets of values of the feature variables corresponding to the different label values

Fig. 4

<u>500</u>

501

Data acquisition unit

502

Variable classification unit

503

First set determination unit

504

Second set determination unit

505

Set output unit

Fig. 5

EP 3 901 789 A1

600

Processing apparatus ⌐601    ROM ⌐602    RAM ⌐603

604

I/O interface ⌐605

Input apparatus 606    Output apparatus 607    Storage apparatus 608    Communication apparatus 609

Fig. 6

18

## INTERNATIONAL SEARCH REPORT

| International application No. |
|---|
| **PCT/CN2020/095193** |

**A.  CLASSIFICATION OF SUBJECT MATTER**

G06F 16/9535(2019.01)i

According to International Patent Classification (IPC) or to both national classification and IPC

**B.  FIELDS SEARCHED**

Minimum documentation searched (classification system followed by classification symbols)

G06F; G06Q

Documentation searched other than minimum documentation to the extent that such documents are included in the fields searched

Electronic data base consulted during the international search (name of data base and, where practicable, search terms used)

CNPAT, CNKI, WPI, EPODOC: 用户, 信用, 特征, 属性, 标签, 标识, 离散, 连续, 集合, 最优, 部分, 组合, 权重, feature, user, identifier, label, discrete, continuous, set, value

**C.  DOCUMENTS CONSIDERED TO BE RELEVANT**

| Category* | Citation of document, with indication, where appropriate, of the relevant passages | Relevant to claim No. |
|---|---|---|
| PX | CN 110795638 A (BEIJING BAIDU NETCOM SCIENCE AND TECHNOLOGY CO., LTD.) 14 February 2020 (2020-02-14)<br>claims 1-12 | 1-12 |
| Y | CN 106651574 A (SOOCHOW UNIVERSITY) 10 May 2017 (2017-05-10)<br>description, paragraphs [0074]-[0086] | 1, 4-6, 9-12 |
| Y | CN 108154430 A (SHANGHAI CREDITX INFORMATION TECHNOLOGY CO., LTD.) 12 June 2018 (2018-06-12)<br>description, paragraphs [0029]-[0032] | 1, 4-6, 9-12 |
| A | CN 107545360 A (ZHEJIANG BANGSUN TECH CO., LTD.) 05 January 2018 (2018-01-05)<br>entire document | 1-12 |
| A | US 2016125297 A1 (UMM AL-QURA UNIVERSITY) 05 May 2016 (2016-05-05)<br>entire document | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 August 2020** | **09 September 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/095193**

| Patent document cited in search report | | | Publication date (day/month/year) | Patent family member(s) | | | Publication date (day/month/year) |
|---|---|---|---|---|---|---|---|
| CN | 110795638 | A | 14 February 2020 | None | | | |
| CN | 106651574 | A | 10 May 2017 | None | | | |
| CN | 108154430 | A | 12 June 2018 | None | | | |
| CN | 107545360 | A | 05 January 2018 | None | | | |
| US | 2016125297 | A1 | 05 May 2016 | WO | 2016067070 | A1 | 06 May 2016 |

Form PCT/ISA/210 (patent family annex) (January 2015)

**EP 3 901 789 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911106997